(19) Europäisches Patentamt

European Patent Office

Office européen des brevets

(11) Publication number: **0 376 267**
**A2**

(12) **EUROPEAN PATENT APPLICATION**

(21) Application number: **89123983.2**

(22) Date of filing: **27.12.89**

(30) Priority: **28.12.88 JP 333614/88**

(43) Date of publication of application:
**04.07.90 Bulletin 90/27**

(84) Designated Contracting States:
**DE FR GB**

(51) Int. Cl.⁵: **G11B 15/665**

(71) Applicant: **KABUSHIKI KAISHA TOSHIBA**
**72, Horikawa-cho Saiwai-ku**
**Kawasaki-shi Kanagawa-ken 210(JP)**

Applicant: **TOSHIBA AUDIO VIDEO**
**ENGINEERING CO., LTD.**
**3-3-9, Shinbashi Minato-ku**
**Tokyo(JP)**

(72) Inventor: **Sugano, Hiroyuki Intellectual**
**Property Division**
**Kabushiki Kaisha Toshiba 1-1 Shibaura**
**1-chome**
**Minato-ku Tokyo 105(JP)**

(74) Representative: **Henkel, Feiler, Hänzel &**
**Partner**
**Möhlstrasse 37**
**D-8000 München 80(DE)**

(54) **Helical scan type tape loading apparatus with tape twist protection.**

㉗ A tape loading apparatus extracts a tape (t) from a tape cassette (c) and winds the tape around a helical scan type cylinder (37). First and second guide rails (38a, 38b) are respectively formed between tape loading start positions (x) and tape loading end positions (z) in a direction substantially perpendicular to a running direction of the tape along both sides of the cylinder (37). First and second tape loading mechanisms (39a, 39b) respectively include base members (39a, 39b) movably supported on the first and second guide rails (38a, 38b), respectively, inclined posts (40a, 40b) which are obliquely formed on the base members (39a, 39b), respectively, at positions located inward from the corresponding guide rails (38a, 38b) so as to be substantially parallel to an axis of the cylinder (37), and guide rollers (41a, 41b) which are respectively formed on the base members (39a, 39b) at positions located substantially immediately above the guide rails (38a, 38b) in a substantially vertical state so as to be located abreast of the inclined posts (40a, 40b). A driving portion transmits a driving force to the first and second tape loading mechanisms (39a, 39b) so as to move the first and second loading mechanisms (39a, 39b) along the first and second guide rails (38a, 38b). The first and second guide rails (38a, 38b) are respectively formed into arcuated shapes which protrude outward so as to allow the guide rollers (41a, 41b) to move at least from posi tions near the tape loading start positions (x) to positions near the tape loading end positions (z) while leading the inclined posts (40a, 40b) of the first and second tape loading mechanisms (39a, 39b).

FIG. 4

# Helical scan tape type loading apparatus with tape twist protection

The present invention generally relates to a magnetic recording/reproducing apparatus and, more particularly, to a helical scan type tape loading apparatus which can be applied to a magnetic recording/reproducing apparatus such as a video tape recorder (hereafter VTR).

Generally, in a VTR, when a user inserts a tape cassette in the cassette holder, which is arranged at the front portion of the VTR, in a substantially horizontal state, the front loading unit is operated first to load the cassette holder to a tape driving portion in a substantially horizontal state so as to load the tape cassette to the tape driving portion. Thereafter, the tape loading apparatus is operated to extract the tape from the tape cassette and wind it around the cylinder. In this case, the operation mode of the tape driving portion is switched to a predetermined mode, and driving of the tape is started.

Such a VTR is inevitably required to realize a highly accurate operation by reliable operation control of each component while ensuring a simple arrangement.

A tape loading apparatus is one of such apparatuses which can realize the above-described VTR. The tape loading apparatus is used to extract the tape from the tape cassette by using a tape extract member and to wind it around the cylinder. This tape loading apparatus is designed to extract the tape from the tape cassette by using the tape extract member and to wind it around the helical scan type cylinder. Therefore, this apparatus requires an accurate tape pass in a state in which loading of the tape is completed.

In the above tape loading apparatus, however, an inclined post which is formed abreast of the tape extract member so as to be substantially parallel to the cylinder, and a guide roller substantially perpendicular to a chassis on which the cylinder is rotatably supported are used to extract the tape of the tape cassette and wind it around the cylinder. With this arrangement, when the tape of the tape cassette is extracted, the tape is supported between the cylinder and the inclined post. For this reason, the tape tends to be twisted, and slips off from the guide roller or slips over flanges at both the ends of the guide roller. As a result, the tape is damaged. This is because if the tape is twisted between the cylinder and the inclined post which are substantially parallel to each other, the tape moves in the axial direction of the guide roller as it is extracted, and slips over flanges at both the ends of a tape winding portion, or shifts from the normal position on the guide roller.

As described above, in the conventional tape loading apparatus, a tape is moved in the axial direction of the guide roller due to a twist of the tape which is generated during a tape loading operation, and hence the tape tends to be damaged.

It is, therefore, an object of the present invention to provide a new and improved helical scan type tape loading apparatus with a tape twist protection in which an accurate, smooth tape loading operation can be realized with a simple arrangement.

According to the present invention, there is provided a tape loading apparatus which is adapted to extract a tape from a tape cassette and wind the tape around a helical scan type cylinder, the apparatus comprising:
first and second guide rail means respectively formed between tape loading start positions and tape loading end positions in a direction substantially perpendicular to a running direction of the tape along both sides of the cylinder;
first and second tape loading means including base members movably supported on the first and second guide rail means, respectively, inclined posts which are obliquely formed on the base members, respectively, at positions located inward from the corresponding guide rail means so as to be substantially parallel to an axis of the cylinder, and guide rollers which are respectively formed on the base members at positions located substantially immediately above the guide rail means in a substantially vertical state so as to be located abreast of the inclined posts; and
driving means for transmitting a driving force to the first and second tape loading means so as to move the first and second loading means along the first and second guide rail means,
wherein the first and second guide rail means are respectively formed into arcuated shapes which protrude outward so as to allow the guide rollers to move at least from positions near the tape loading start positions to positions near the tape loading end positions while leading the inclined posts of the first and second tape loading means.

According to the above-described arrangement, the tape extracted from the tape cassette by the first and second tape loading means is supported by the guide roller, by which the tape is guided prior to the inclined post, and the cylinder and is wound around the cylinder. Therefore, a portion of the tape which is inclined by the cylinder is corrected by the guide roller. As a result, movement of the tape in the axial direction is restricted upon loading of the tape, and the tape is supported by the tape winding portion between the guide roller and the flange, thus performing an accurate tape loading operation.

Additional objects and advantages of the invention will be set forth in the description which follows, and in part will be obvious from the description, or may be learned by practice of the invention. The objects and advantages of the invention may be realized and obtained by means of the instrumentalities and combinations particularly pointed out in the appended claims.

The accompanying drawings, which are incorporated in and constitute a part of the specification, illustrate presently preferred embodiments of the invention and, together with the general description given above and the detailed description of the preferred embodiments given below, serve to explain the principles of the invention.

Figs. 1A to 1C are top, bottom, and side views of a VTR to which a cassette loading apparatus according to an embodiment of the present invention is applied;

Fig. 2 is a sectional view showing a clutch mechanism in Fig. 1B in detail;

Fig. 3 is a perspective view showing a mode switching mechanism and a belt transmission mechanism portion in detail; and

Fig. 4, Figs. 5A to 5E, and Fig. 6 are views with respect showing, in detail, tape loading states with respect to a cylinder and its link mechanism.

An embodiment of the present invention will be described in detail below with reference to the accompanying drawings.

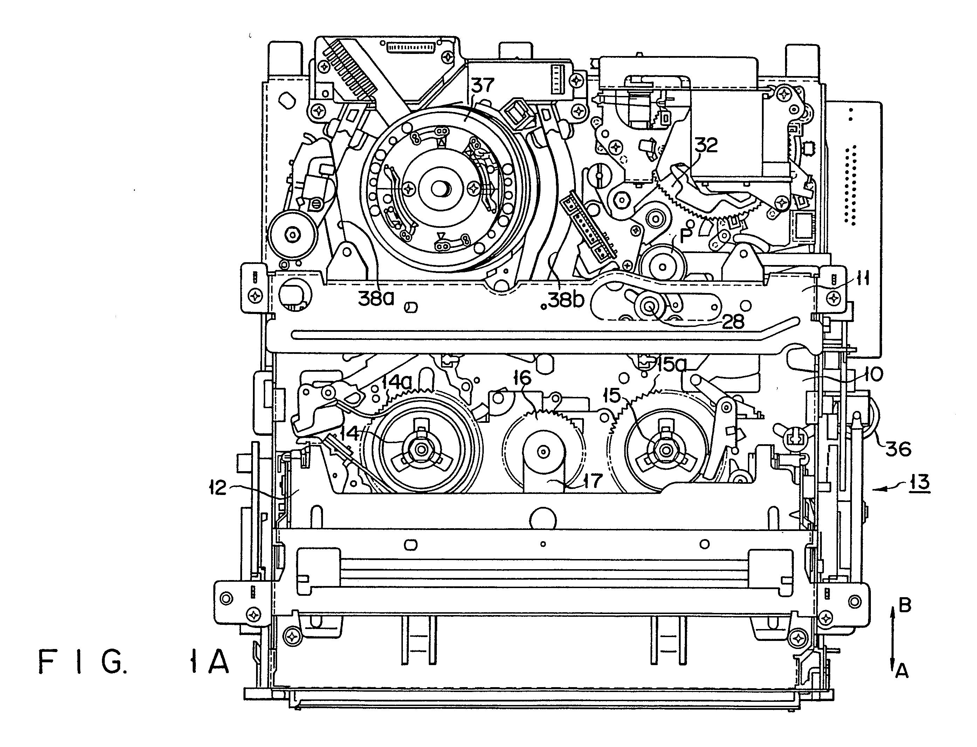

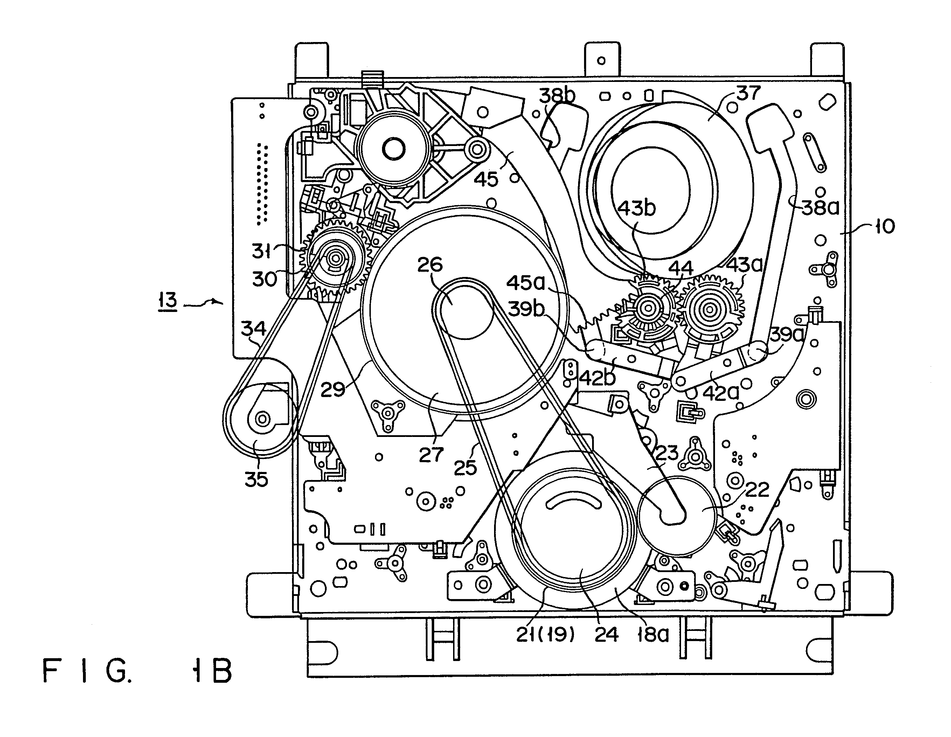

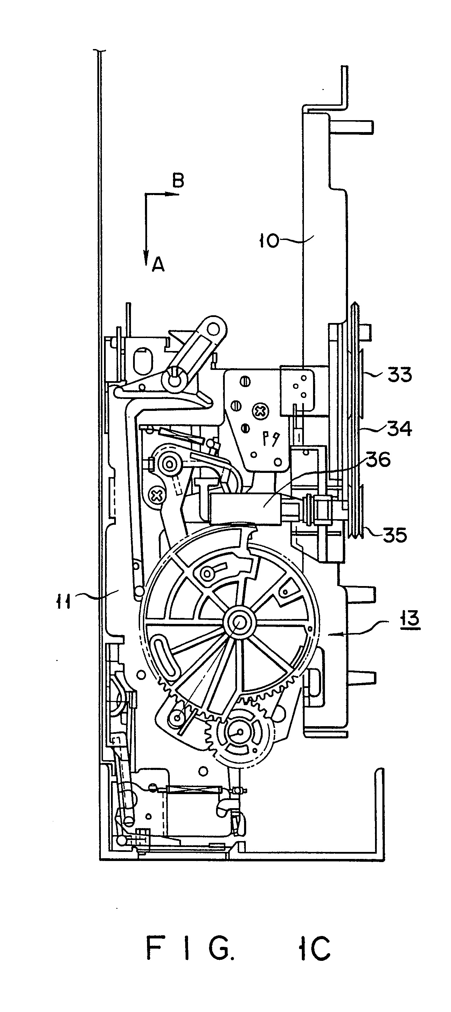

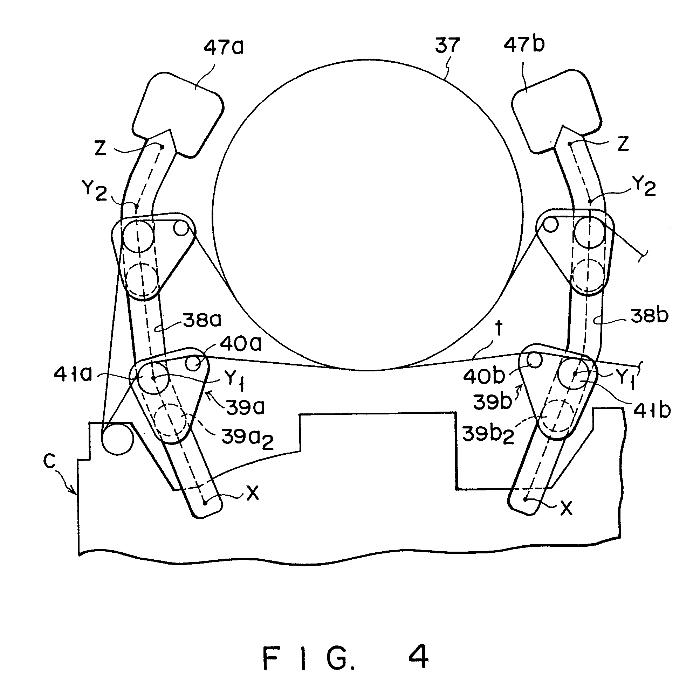

Figs. 1A to 1C show a VTR to which a tape loading apparatus according to an embodiment of the present invention is applied. Figs. 1A, 1B, and 1C are respectively top, bottom, and side views of the VTR. Referring to Figs. 1A to 1C, reference numeral 10 denotes a main chassis. A frame 11 is arranged at one end of the main chassis 10. A cassette holder 12 is supported on the frame 11 so as to be movable in directions indicated by arrows A and B. A tape cassette C (not shown in Figs. 1A to 1C) is inserted in the cassette holder 12 when the holder 12 is set at a cassette insertion position which is the farthest position in the direction indicated by the arrow A. Upon this insertion operation, a loading drive mechanism 13 of a front loading unit is driven and moved in the direction indicated by the arrow B so as to load the tape cassette C (not shown in Figs. 1A to 1C; see Fig. 4) to reel hubs 14 and 15 on the tape feed side and tape take-up side of a tape driving portion.

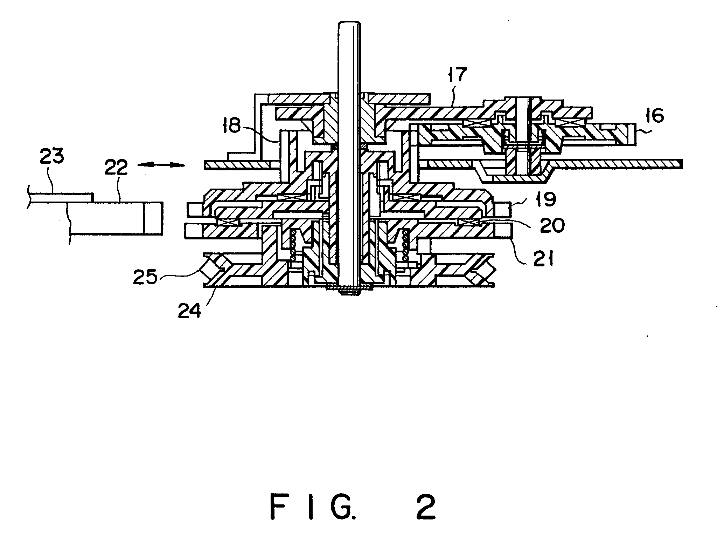

Gears 14a and 15a are respectively arranged on the reel hubs 14 and 15, and a drive gear 16 constituting a tape driving mechanism is arranged between these gears 14a and 15a. The drive gear 16 is supported on one end of a swing member 17. As shown in Fig. 2, a gear 18 is attached to the other end of the swing member 17, and the gear 18 is meshed with the drive gear 16. The gear 18 is coaxially arranged with a first gear 19 of a clutch gear mechanism 18a. The first gear 19 is stacked on a second gear 21 through a friction member 20. A clutch switching gear 22 is opposed to the first and second gears 19 and 21 so as to be freely brought into contact therewith and separated therefrom. The gear 22 is pivotally mounted through a switching lever 23 which is interlocked with an operation mode switching mechanism, and is selectively meshed with the first and second gears 19 and 21 in response to the operation mode. A pulley 24 is coaxially arranged with the second gear 21. One end of a drive belt 25 is looped around the pulley 24, and the other end of the belt 25 is looped around a drive pulley 26 (see Fig. 1B). The drive pulley 26 is fitted on the rotating shaft of a driving capstan motor 27. A capstan 28 is coaxially mounted on the capstan motor 27. A tape t is to be urged against the capstan 28 through a pinch roller P. The driving force of the motor 27 is transmitted to the pulley 24 through the drive belt 25 and is subsequently transmitted to the second gear 21.

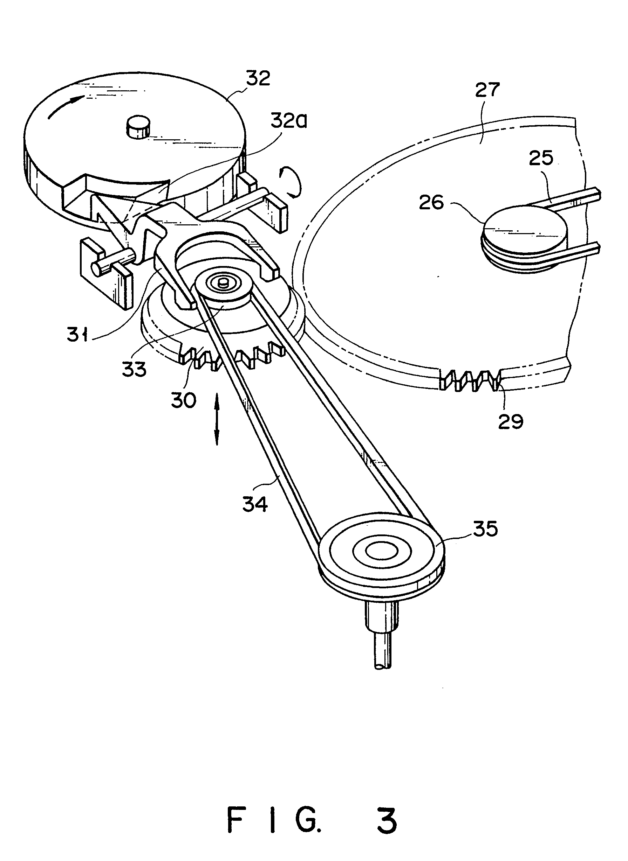

A drive gear 29 is fitted around a rotating body of the capstan motor 27. A lifting gear 30 is opposed to the drive gear 29. The lifting gear 30 is arranged to be freely moved, through a spring mechanism (not shown), in the axial direction with respect to the main chassis 10. One end of a pivotal switching lever 31 is engaged with the upper surface of the lifting gear 30 (see Fig. 3). The other end of the switching lever 31 is engaged with a first cam portion formed on one surface of a mode switching cam 32 of the operation mode switching mechanism. The pivotal movement of the switching lever 31 is controlled through the mode switching cam 32 in such a manner that one end of the switching lever 31 is separated from the lifting gear 30 in a cassette loading state so as to cause the lifting gear 30 to move upward through the spring mechanism (not shown) and to be meshed with the drive gear 29, and, in a state in which cassette loading is completed, one end of the switching lever 31 causes the lifting gear 30 to move downward against the biasing force of the spring mechanism (not shown) to be separated from the drive gear 29. In addition, a pulley 33 is coaxially arranged on the lifting gear 30. One end of a drive belt 34 is looped around the pulley 33. The other end of the drive belt 34 is looped around a pulley 35. The pulley 35 is coaxially arranged with a worm 36 (see Fig. 1A) of the loading drive mechanism 13. The rotational force of the capstan motor 27 is selectively transmitted to the pulley 33, the drive belt 34, the pulley 35, and the worm 36 in accordance with the vertical movement of the lifting gear 30, thereby controlling the driving operation of the loading drive mechanism 13 and moving the cassette holder 12 in the above-described manner.

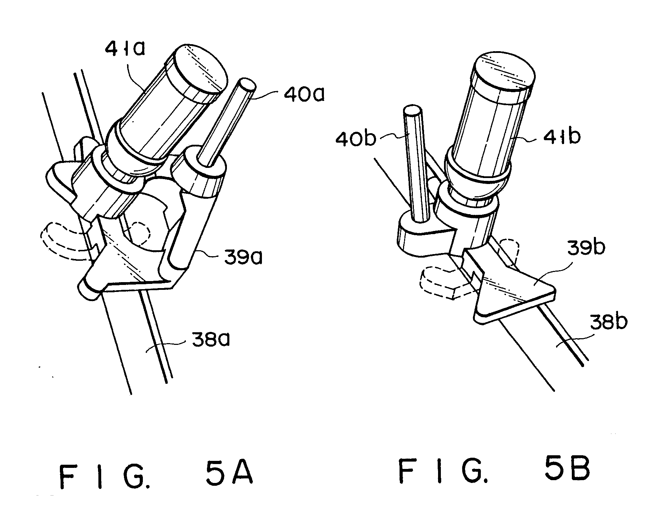

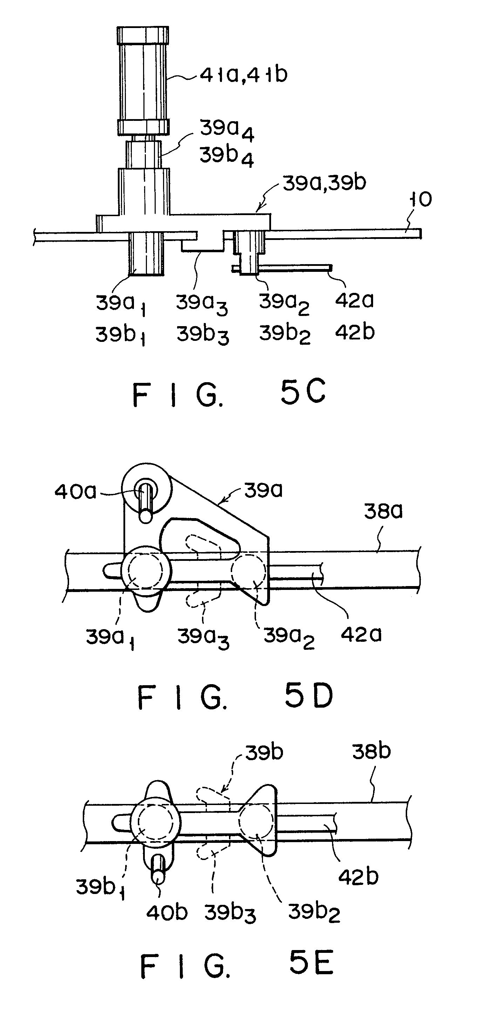

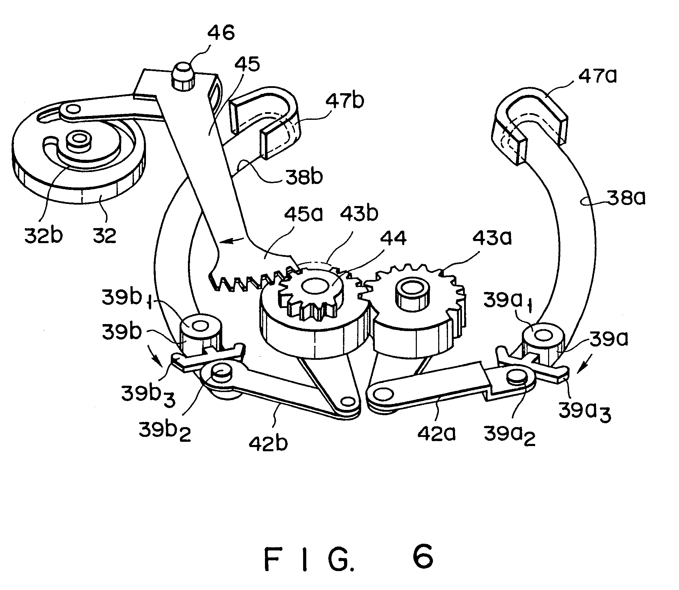

A helical scan type cylinder 37 on which magnetic heads are mounted is arranged on the main chassis 10 so as to correspond to the frame 11 and to be obliquely rotatable with respect to the main chassis 10. As guide rails for guiding a tape loading operation, for example, first and second guide grooves 38a and 38b are formed around the cylinder 37 on the main chassis 10 so as to oppose the tape inlet and outlet sides, respectively. As shown in Fig. 4, first and second tape extract members 39a and 39b are movably housed in the first and second guide grooves 38a and 38b. As shown in Figs. 5A to 5E, inclined posts 40a and 40b which are substantially parallel to the cylinder 37 and guide rollers 41a and 41b which are substantially perpendicular to the rotating support surface of the cylinder 37, i.e., the main chassis 10 are respectively mounted on the first and second tape extract members 39a and 39b so as to be abreast with each other. The inclined posts 40a and 40b, and the guide rollers 41a and 41b are formed upright on base portions mounted on the main chassis 10. Two pairs of columnar projections 39a1 and 39a2, and 39b1 and 39b2 which vertically extend from the base portions through the guide grooves 38a and 38b, respectively, are arranged on the tape extract members 39a and 39b, respectively at predetermined intervals. The diameter of each of the projections 39a1 to 39b2 is set to be slightly smaller than the width of each of the guide grooves 38a and 38b so as to prevent backlash and to be movable. This determines the postures of the tape extract members 39a and 39b of the main chassis 10 in the horizontal direction. In addition, projection pieces 39a3 and 39b3 whose widths are slightly larger than those of the guide grooves 38a and 38b are formed on the tape extract members 39a and 39b so as to clamp the main chassis 10 from its upper and lower surfaces, thereby preventing backlash of the tape extract members 39a and 39b in the vertical direction. Lock portions 39a4 and 39b4 are formed on the tape extract members 39a and 39b. The lock portions 39a4 and 39b4 are respectively brought into contact with hold members 47a and 47b so as to position the tape extract members 39a and 39b when they move to tape loading end positions. The curvatures of the first and second guide grooves 38a and 38b are set in relation to the positions of the inclined posts 40a and 40b, the guide rollers 41a and 41b, and the projections 39a1 to 39b2 of the tape extract members 39a and 39b in such a manner that the guide rollers 41a and 41b of the tape extract members 39a and 39b are respectively moved from positions Y1 near positions X as loading start positions to positions Y2 near positions Z as loading end positions so as to lead the inclined posts 40a and 40b. One end of each of first and second link mechanisms 42a and 42b is coupled to a corresponding base portion of the first and second tape extract members 39a and 39b, as shown in Fig. 6. The other end of each of the first and second link mechanisms 42a and 42b is supported by a corresponding one of first and second drive gears 43a and 43b which are meshed with each other. A notched gear 44 is coaxially arranged on the second drive gear 43b. A fan-like gear 45a which is formed on one end of a drive lever 45 is meshed with the notched gear 44. The intermediate portion of the drive lever 45 is pivotally supported on the main chassis 10 through a pivot shaft 46, and the other end thereof is engaged with a second cam surface 32b of the mode switching cam 32. Therefore, the drive lever 45 is controlled upon interlocking with the mode switching cam 32, which is driven by a tape loading motor (not shown), so as to drive the first and second tape extract members 39a and 39b through the first and second drive gears 43a and 43b, the notched gear 44, and the first and second link mechanisms 42a and 42b, thereby performing tape loading. In this case, the guide rollers 41a and 41b of the first and second tape extract members 39a and 39b are respectively guided by the first and second guide grooves 38a and 38b so as to lead the inclined posts 40a and 40b, thereby winding the tape t around the cylinder 37. Note that even in a tape unloading operation in which the drive lever 45 is reversed, the first and second tape extract members 39a and 39b are guided by the first and second guide grooves 38a and 38b, and the guide rollers 41a and 41b are moved from positions Z to the positions X so as to lead the inclined posts 40a and 40b.

As described above, in the above-described tape loading apparatus, the first and second guide grooves 38a and 38b are formed around the cylinder 37 so as to guide the first and second tape extract members 39a and 39b in such a manner that the guide rollers 41a and 41b are caused to lead the inclined posts 40a and 40b. With this arrangement, tape loading and unloading are performed by driving the first and second tape extract members 39a and 39b along the first and second guide grooves 38a and 38b, respectively. Since the tape t is extracted from the tape cassette C by the first and second tape extract members 39a and 39b, and tape loading is performed while the tape t is supported by the guide rollers 41a and 41b, which are guided to lead the inclined posts 40a and 40b, and the cylinder 37, portions of the tape which are inclined by the cylinder 37 are corrected by the guide rollers 41a and 41b. According to this arrangement, the movement of the tape t in the axial direction is restricted as tape loading proceeds, and tape loading is accurately and smoothly performed while the tape is reliably supported at a normal position between the flanges of the guide rollers 41a and 41b. This prevents damage to the tape t, and hence high-precision tape pass is reliably performed.

The present invention is not limited to the above-described embodiment. Various changes and modifications can be made within the spirit and scope of the invention.

As has been described above in detail, according to the present invention, there is provided a tape loading apparatus which can perform an accurate, smooth tape loading operation with a simple arrangement.

## Claims

1. A tape loading apparatus which is adapted to extract a tape (t) from a tape cassette (c) and wind the tape around a helical scan type cylinder (37), said apparatus comprising:
first and second guide rail means (38a, 38b) respectively formed between tape loading start positions (x) and tape loading end positions (z) in a direction substantially perpendicular to a running direction of the tape along both sides of said cylinder (37);
first and second tape loading means (39a, 39b) including base members (39a, 39b) movably supported on said first and second guide rail means (38a, 38b), respectively, inclined posts (40a, 40b) which are obliquely formed on said base members (39a, 39b), respectively, at positions located inward from said corresponding guide rail means (38a, 38b) so as to be substantially parallel to an axis of said cylinder (37), and guide rollers (41a, 41b) which are respectively formed on said base members (39a, 39b) at positions located substantially immediately above said guide rail means (38a, 38b) in a substantially vertical state so as to be located abreast of said inclined posts (40a, 40b); and
driving means (32) for transmitting a driving force to said first and second loading means so as to move said first and second tape loading means (39a, 39b) along said first and second guide rail means (38a, 38b),
characterized in that said first and second guide rail means (38a, 38b) are respectively formed into arcuated shapes which protrude outward so as to allow said guide rollers (41a, 41b) to move at least from positions near the tape loading start positions (x) to positions near the tape loading end positions (z) while leading said inclined posts (40a, 40b) of said first and second tape loading means (39a, 39b).

2. An apparatus according to claim 1, characterized in that said first and second guide rail means (38a, 38b) respectively comprise guide grooves formed in a chassis.

3. An apparatus according to claim 2, characterized in that said first and second tape loading means (39a, 39b) respectively comprise two projections (39a1, 39a2, 39b1, 39b2) which are engaged with the corresponding guide grooves under said base members at predetermined intervals.

4. An apparatus according to claim 2, characterized in that said first and second tape loading means (39a, 39b) respectively comprise projection pieces (39a3, 39b3) for clamping said chassis together with said base members (39a, 39b).

5. An apparatus according to claim 1, characterized in that said driving means (32) comprises a link mechanism (42a, 42b) and gear means (43a, 43b, 44, 45a) for driving said link mechanism (42a, 42b)

EP 0 376 267 A2

F I G. 1A

F I G. 1B

EP 0 376 267 A2

F I G. 1C

F I G. 2

F I G. 3

F I G.　4

EP 0 376 267 A2

F I G.   5A         F I G.   5B

41a, 41b

39a₄
39b₄

39a, 39b

10

39a₁     39a₃     39a₂     42a
39b₁     39b₃     39b₂     42b

F I G.     5C

40a          39a          38a

39a₁      39a₃      39a₂      42a

F I G.     5D

39b          38b

39b₁      40b     39b₃      39b₂      42b

F I G.     5E

F I G.    6